# EUROPEAN PATENT SPECIFICATION

(11) **EP 3 746 351 B1**
(45) Date of publication and mention of the grant of the patent: **03.01.2024**
(21) Application number: 19747320.0
(22) Date of filing: 30.01.2019
(51) Int. Cl.: B62D 55/26, B62D 55/24

(54) **VEHICLE TRACK CORE**
FAHRZEUGSPURKERN
NOYAU DE CHENILLE DE VÉHICULE

(30) Priority: 31.01.2018 US 201862624437 P; 29.01.2019 US 201916260397
(43) Date of publication of application: 09.12.2020
(73) Proprietor: SRJ, Inc., Schaumburg, Illinois 60173 (US)
(72) Inventor: JEE, Woo Young, Schaumburg, Illinois 60173 (US)
(74) Representative: Gray, James
(86) International application number: PCT/US2019/015764
(87) International publication number: WO 2019/152460

(56) References cited:
- EP-A1- 1 008 509
- JP-A- 2007 176 208
- JP-A- 2007 176 208
- JP-A- 2008 230 330
- JP-A- 2009 234 425
- JP-A- 2009 234 425
- JP-A- 2013 001 349
- US-B2- 8 672 423

## Description

### TECHNICAL FIELD

The present disclosure relates to a track for a vehicle, and more particularly, a vehicle track including one or more cores.

### BACKGROUND

Many off-road vehicles, such as earthmoving vehicles (e.g., excavators, skid steer track loaders, or multi-terrain track loaders) and agricultural vehicles, include a vehicle track coupled to a drive system, which may include, for example, one or more drive sprockets. A vehicle track may help provide traction on surfaces that traditional wheels having a circular cross-section may not be able to adequately grip. For example, a vehicle with a vehicle track may bridge a greater surface area than a vehicle with two or more circular wheels, which may help the vehicle with the vehicle track traverse surfaces that the vehicle with circular wheels would not ordinarily be able to traverse, such as uneven or loose surfaces (e.g., gravel or mud).

In some cases, a vehicle track is formed of metal, rubber, such as a molded rubber, or a combination of metal and rubber. The vehicle track may be molded as a single, integral piece or an assembly of interconnected parts that are coupled together to define a vehicle track. Some vehicle tracks include a track body with a first, interior side that is configured to engage with a drive system, and a second, exterior side that includes multiple protrusions (e.g., "traction lugs" or "tread lugs") extending from one or more common surfaces and defining a tread pattern. In some examples, the vehicle track may include a plurality of cores embedded within the track body. The cores may define a portion of a shape of the vehicle track, engage with a drive system, or the like.

### SUMMARY

The invention provides a vehicle track core according to claims 1 to 4 and a method of forming a vehicle track according to claims 5 to 8. The disclosure describes systems and methods relating to a core for a vehicle track, as well as relating to a vehicle track including one or more cores. In some examples, the core (also referred to herein as a "vehicle track core") may include a body, a first edge portion, and a second edge portion. Each of the first and second edge portions defines at least one protrusion that extends from a major surface of the respective body. The width of the at least one protrusion is less than the width of the edge portion, and a track body of the vehicle track encases the at least one protrusion. Such a vehicle track core may allow the track body to be both supported by the core and at least partially deform around the at least one protrusion. In this way, the track body may be prevented from collapsing or significantly deforming upon an application of force to a side of the track body corresponding to a respective edge portion of a core due to the support from the at least one protrusion, while still being able to at least partially deform around the at least one protrusion. The partial deformation and flexibility of the track body around the at least one protrusion may help reduce at least some stress experienced by the track body in response to a given force. Reduction of at least some stress experienced by the track body may increase the useful life of the vehicle track, such as by reducing the formation of cracks in the track body, widening of cracks in the track body, wear of the track body, prevent separation of the core and the track body, or the like.

In one example, a vehicle track includes a track body and a plurality of cores, where each core of the plurality of cores is at least partially embedded within the track body. Each core of the plurality of cores includes a body including a first end and a second end opposite the first end. The body has a body width measured along a first axis extending between the first and second ends, and a body length measured along a second axis orthogonal to the first axis. Each core of the plurality of cores also includes a first edge portion extending from the first end of the body and a second edge portion extending from the second end of the body, where each of the first and second edge portions defines at least one protrusion that extends from a major surface of the respective body. The at least one protrusion has a protrusion length that is less than the body length.

In another example, a vehicle track includes a track body and a plurality of cores, where each core of the plurality of cores is at least partially embedded within the track body. Each core of the plurality of cores includes a body including a first end and a second end opposite the first end. The body has a body width measured along a first axis extending between the first and second ends, and a body length measured along a second axis orthogonal to the first axis. Each core of the plurality of cores also includes a first edge portion extending from the first end of the body and a second edge portion extending from the second end of the body, where each of the first and second edge portions defines at least one protrusion that extends from a major surface of the respective body. The at least one protrusion has a protrusion length that is less than the body length.

In another example, a method of forming a vehicle track includes forming a plurality of cores, where each core of the plurality of cores includes a body including a first end and a second end opposite the first end. The body has a body width measured along a first axis extending between the first and second ends, and a body length measured along a second axis orthogonal to the first axis. Each core of the plurality of cores also includes a first edge portion extending from the first end of the body and a second edge portion extending from the second end of the body, where each of the first and second edge portions defines at least one protrusion that extends from a major surface of the respective body. The at least one protrusion has a protrusion length that is less than the body length. The method also includes forming a track body around at least a portion of each core of the plurality of cores such that each core of the plurality of cores is at least partially embedded within the track body.

In other examples, a method includes using any of the vehicle tracks and/or vehicle cores described herein.

The details of one or more examples of the disclosure are set forth in the accompanying drawings and the description below. Other features, objects, and advantages of the disclosure will be apparent from the description and drawings, and from the claims.

### BRIEF DESCRIPTION OF DRAWINGS

FIG. 1 is a perspective view of a part of an example vehicle track including a track body and a plurality of cores, the vehicle track being mounted about a drive sprocket wheel.
FIG. 2 is a perspective view of a part of an example vehicle track and illustrates a plurality of example cores embedded within an example track body.
FIG. 3 is a perspective view of an example core configured to be at least partially embedded in a track body of a vehicle track.
FIG. 4 is a perspective view of another example core configured to be at least partially embedded in a track body of a vehicle track.
FIGS. 5A and 5B are schematic views of an example part of a vehicle track on a ground surface including an obstruction.
FIG. 6 is a flow diagram illustrating an example technique of forming a vehicle track.

### DETAILED DESCRIPTION

In examples described herein, a vehicle track includes a track body and one or more cores, which may be embedded in the track body or otherwise fully or partially surrounded by the track body. The track body is configured to engage with a drive system of a vehicle and engage with a ground surface in order to move a vehicle mounted to the vehicle track. The cores are configured to stabilize a track body, maintain a shape of a track body, strengthen a track body, define one or more structures of a track body, and/or reduce stress experienced by a track body.

In some examples described herein, a core may include a body, and first and second edge portions that each define at least one protrusion that extends from a major surface of the respective body. The length of the at least one protrusion is less than the length of the body of the core, and a track body of the vehicle track encases the at least one protrusion. A vehicle track core configured in this manner may allow the track body to be supported by the core while also enabling the track body to at least partially deform around the at least one protrusion when stress is applied to a respective side of the track body. The combination of partial deformation and support may reduce at least some stress experienced by the track body in response to a given applied force, prevent collapse of the track body, or the like. Reduction of at least some stress experienced by the track body may increase the useful life of the vehicle track. For example, the formation of cracks in the track body, widening of cracks in the track body, wear of the track body, prevent separation of the core and the track body, or the like may be reduced or slowed.

In examples in which a vehicle track core does not include the at least one protrusion that enables a track body to partially deform relative to the at least one protrusion, a track body encasing the vehicle track core may become detached from the vehicle track core, may not be able to deform or flex around a protrusion, and/or may not be supported by the vehicle track core upon an application of force on the track body. As a result, application of force on the track body may increase stress on the track body, which may result in the formation of cracks in the track body, widening of cracks that may have previously formed in the track body, separation of the core and the track body, or other wear of the track body. Such wear, unattachment of the track body to the vehicle track core, lack of support of the track body, forced rigidity of the track body, or combinations thereof may reduce the useful life of the vehicle track.

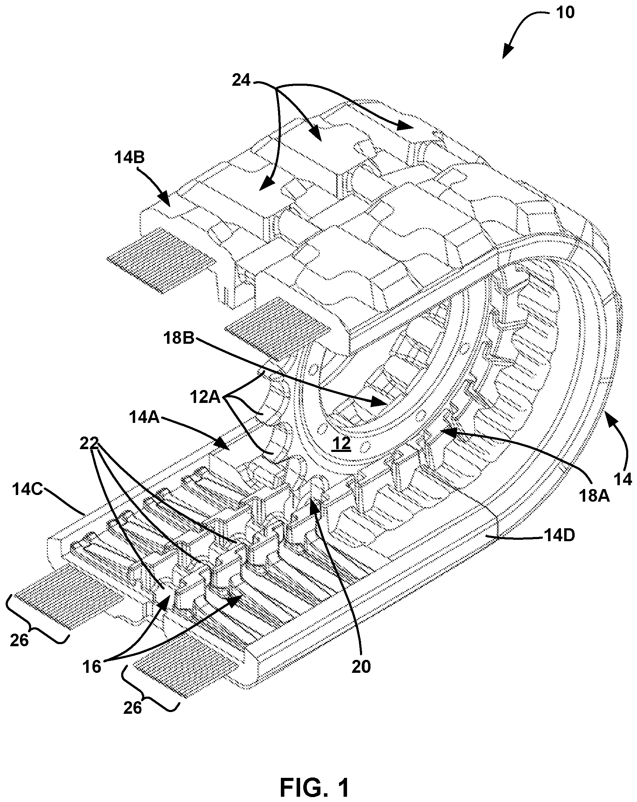

FIG. 1 is a perspective view of a part of an example vehicle track 10 that includes a track body 14 and a plurality of cores 16, the track 10 being mounted about drive sprocket wheel 12. Vehicle track 10 may, for example, define an endless track body or otherwise define a continuous track configured to be driven by one or more drive sprocket wheels 12 (e.g., two drive sprocket wheels 12). Drive sprocket wheel 12 may be, for example, a part of a drive system of a vehicle. The drive system may also include one or more other drive sprocket wheels, such as a drive sprocket wheel that is positioned on an opposite end of vehicle track 10 from drive sprocket wheel 12. Drive sprocket wheel 12, which can be actuated by a drive motor, engages with vehicle track 10 and rotates vehicle track 10. As vehicle track 10 rotates and engages with a ground surface, a vehicle on which vehicle track 10 is mounted moves either forward or backward, depending on the direction in which vehicle track 10 rotates. In other examples, other drive mechanisms may be used to drive vehicle track 10. Vehicle track 10 may be used with an industrial vehicle, such as, but not limited to, an earthmoving vehicle (e.g., a skid steer loader) or an agricultural vehicle (e.g., a tractor).

In FIG. 1, a part of vehicle track 10 has been cut away to illustrate first side 14A and second side 14B of track body 14. Second side 14B of track body 14 is on an opposite side of track body 14 from first side 14A. Disposed between first and second sides 14A, 14B of track body 14 are reinforcing members 26 and cores 16, which are described in further detail below. A portion of first side 14A of track body 14 has been cut away as to show some cores 16 of plurality of cores 16 embedded within track body 14.

First side 14A defines an inner circumference of track body 14 and is configured to mount vehicle track 10 to a drive system of a vehicle. In the example shown in FIG. 1, first side 14A includes two rows of guide lugs 18A and 18B (collectively, "guide lugs 18") that help align and engage drive sprocket wheel 12 with vehicle track 10. In particular, guide lugs 18 define guide channel 20 that is sized and shaped to receive drive sprocket wheel 12. Guide lugs 18 of each row are longitudinally (or circumferentially in the case of a continuous vehicle track) aligned with a corresponding guide lug 18 in the opposing row (e.g., one guide lug 18A is aligned with an opposing guide lug 18B). However, in other examples, guide lugs 18 may be arranged to partially longitudinally overlap with a corresponding guide lug 18 in the opposing row or to alternate with guide lugs 18 of the opposing row such that no two guide lugs 18 have the same longitudinal position along track body 14.

First side 14A of track body 14 also defines a plurality of ribs 22 that are configured to engage with drive sprocket teeth 12A of drive sprocket wheel 12 when vehicle track 10 is mounted on drive sprocket wheel 12. As drive sprocket wheel 12 rotates, drive sprocket teeth 12A engage with apertures defined between ribs 22, which rotates vehicle track 10. As a result of the rotation of vehicle track 10, vehicle track 10 (and any vehicle on which vehicle track 10 is mounted) moves in a first direction (e.g., forward). If drive sprocket wheel 12 is rotated in an opposite direction, vehicle track 10 moves in a second direction opposite to the first direction (e.g., backward).

While drive sprocket wheel 12 is shown in the example of FIG. 1, in other examples, other drive systems may be used to support and drive vehicle track 10. For example, rather than engaging with a center of first side 14A of track body 14, the vehicle drive system may include sprockets that engage with shoulders 14C, 14D of track body 14. In such an example, first side 14A of track body 14 may include guide lugs 18 that are adjacent to shoulders 14C, 14D of track body 14, rather than substantially centered, as shown in FIG. 1.

Second side 14B of track body 14 defines an outer circumference of track body 14 (or perimeter in the case of a non-circular track body 14) and at least a part of second side 14B is configured to engage with an exterior surface (e.g., the ground) when vehicle track 10 is mounted on a vehicle, and thus, second side 14B may be referred to as an "exterior" side of track body 14. In order to help track body 14 engage with the exterior surface, second side 14B comprises a tread pattern 24, which is defined by multiple traction lugs extending from a common surface. In some examples, tread pattern 24 is design based on an application of vehicle track 10, performance characteristics desired of vehicle track 10, type of vehicle that vehicle track 10 is mounted on, or the like. Tread pattern 24 may be any suitable tread pattern to fit particular needs.

Track body 14 of vehicle track 10 may be defined by a single molded piece of material or may be an assembly of interconnected parts that are coupled or bonded together to define a vehicle track. In some examples, track body 14 of vehicle track 10 includes (e.g., is formed from or otherwise includes) an elastomer. For example, track body 14 may include a natural rubber, a synthetic rubber, or another elastomeric material. Examples of suitable synthetic rubbers include styrene butadiene rubber and polybutadiene rubber. In some examples, track body 14 may also include other agents and activators to help achieve desired material properties, such as reinforcing agents, vulcanization accelerators, antiozonants, antioxidants, vulcanizing agents, retarders, rubber softeners, tackifiers, or the like. The exact composition of track body 14 may depend upon various factors, including the particular application vehicle track 10 is intended to be used with.

An elastomeric track body 14 may help provide better maneuverability of a vehicle, better ride quality, and/or increased traction as compared to steel vehicle tracks. In one example, the rubber including first side 14A (including guide lugs 18 and ribs 22) has a hardness in a range of about 63 durometer to about 83 durometer, while the rubber including second side 14B has a hardness in a range of about 53 durometer to about 73 durometer. As one example, a rubber having a hardness of about 73 durometer may be used to form first side 14A, while a rubber having a hardness of about 63 durometer may be used to form second side 14B. In other examples, however, track body 14 may be formed from elastomeric or other materials having other durometers. The durometers for the rubber may be measured using the Shore A scale.

In order to increase the strength of vehicle track 10, vehicle track 10 may include may include multiple reinforcing members 26 coupled to track body 14. Reinforcing members 26 extend in a substantially longitudinal direction of track body 14. The longitudinal direction of track body 14 may correspond to a direction that defines a circumference or perimeter of track body 14. Reinforcing members 26 may be embedded in track body 14, such as by placing reinforcing members 26 between layers in track body 14 or embedding reinforcing member 26 in track body 14 during a molding process. Vehicle track 10 may include any suitable number of reinforcing members 26 in any suitable arrangement. For example, in some examples, track body 14 may include about 30 to about 80 reinforcing members 26. The number of reinforcing members 26 may be selected based on a width of track body 14 and/or the desired application of vehicle track 10.

Reinforcing members 26 may be a flexible steel cord (or cable) having a minimum tensile strength of about 400 kilograms. The ends of each reinforcing member 26 may be coupled together in some examples. For example, the ends of each reinforcing member 26 may be adjacent to each other, which may be referred to as a jointless connection, or the ends may overlap in at least one direction, which may be referred to as a jointed connection.

In addition to reinforcing members 26, vehicle track 10 also includes a plurality of cores 16 embedded in track body 14. In some examples, cores 16 embedded in track body 14 or a portion of cores 16 embedded in track body 14 may also be encased (e.g., substantially encompassed by track body 14). The plurality of cores 16 may include any suitable number of cores 16. In some cases, cores 16 may also be referred to as "links" of vehicle track 10. Cores 16 may be embedded (e.g., partially or fully embedded) in track body 14 such that at least a portion of each core 16 is within or surrounded by track body 14. In some examples, cores 16 may be fully embedded in track body 14, and cores 16 may not be exposed as a part of vehicle track 10. In other examples, cores 16 may be partially embedded in track body 14, and a portion of cores 16 may be exposed as a part of vehicle track 10 (e.g., the portion of cores 16 not embedded in track body 14 may be visible).

In some examples, such as in examples in which track body 14 includes multiple layers of material, cores 16 may be positioned (e.g., embedded) between layers of material. Alternatively, in examples in which track body 14 is molded, cores 16 may be introduced into the molding material prior to curing the material to form track body 14, such that the molding material partially or fully surrounds each of the cores 16. In either case, cores 16 may be partially or fully embedded in track body 14.

Cores 16 may be made of any suitable material. In some examples, cores 16 include a metal, such as steel, iron, or another metal. In some such examples, cores 16 may include a single, continuous piece of metal. For example, cores 16 may be manufactured by hot forging, using metal rods, or cast from metal. In other examples, cores 16 may be composed of two or more sections and attached together to form core 16. As one example, a first section of core 16 may be configured to align with the drive sprocket teeth 12A in order to help move vehicle track 10, and a second section may be the remainder of core 16. In some examples, the two sections may be attached or otherwise integrated into a single core 16.

Cores 16 are configured to support track body 14, while also allowing track body 14 to at least partially deform and/or flex, upon the application of a force on a respective side of track body 14. Cores 16 include a first and a second edge portions that each define at least one protrusion with a length (e.g., as measured in the longitudinal direction of track body 14) that is less than a length (e.g., as measured in the longitudinal direction of track body 14) of the respective edge portion. Cores 16 may be embedded in track body 14, and track body 14 may encase the at least one protrusion such that track body 14 both is supported by and can deform around the at least one protrusion upon the application of force on track body 14. For example, track body 14 may encase the at least one protrusion by substantially encompassing the at least one protrusion.

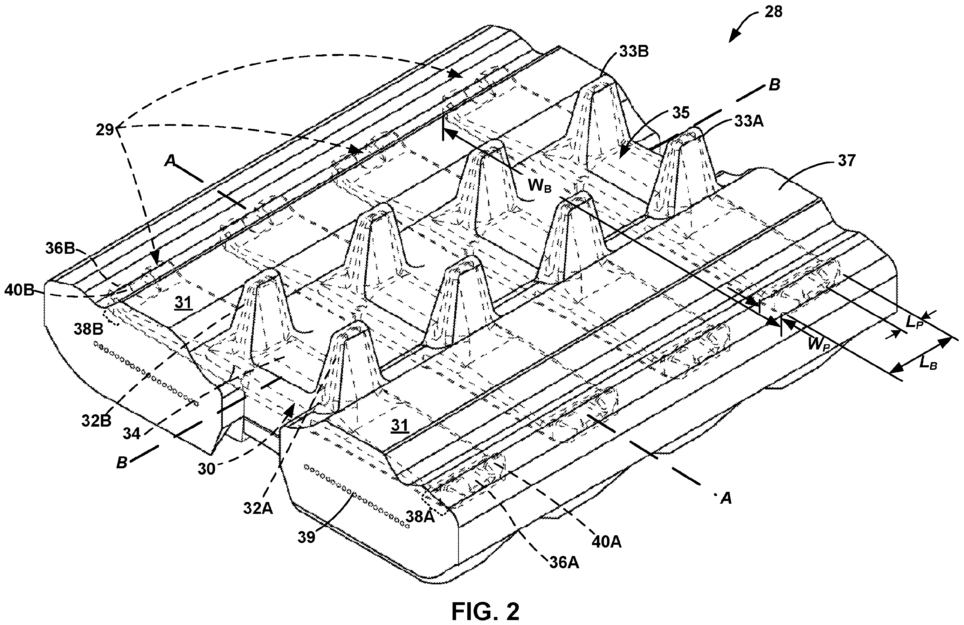

FIG. 2 is a perspective view of a part of an example vehicle track 28 illustrating a plurality of example cores 29 embedded within an example track body 37. Vehicle track 28 may be substantially similar to vehicle track 10 of FIG. 1. For example, track body 37 may be substantially similar to or the same as track body 14, reinforcing members 39 may be substantially similar to or the same as reinforcing members 26, guide lugs 33A, 33B may be substantially similar to or the same as guide lugs 18A, 18B, guide channel 35 may be substantially similar to or the same as guide channel 20. Cores 29 are an example of cores that may be included in a vehicle track, and are shown to have a different configuration than cores 16 shown in FIG. 1. In some examples, each core 29 of the plurality of cores 29 may be similar in configuration. Thus, the description of the following figures describes a particular core 29, but it should be understood that this description may apply to the other cores of plurality of cores 29.

Each core 29 of the plurality of cores includes a body 30 and edge portions 38A, 38B. Body 30 may have any suitable shape, and includes a first end 36A and a second end 36B opposite first end 36A. Body 30 may define a body width extending between first end 36A and second end 36B. As illustrated in FIG. 2, core 29 defines a body width *W_{B}* measured along a first axis A. In some examples, the first axis *A* extends perpendicular (also referred to herein as orthogonal) to a longitudinal (or circumferential) direction of track body 37. In some cases, the body width *W_{B}* may extend across a majority of the width of track body 37 (e.g., perpendicular to the longitudinal or circumferential direction of track body 37).

Body 30 may also define a body length, such as body length *L_{B}* measured along a second axis *B* that is orthogonal to first axis A. In some examples, second axis *B* is in the direction of the longitudinal (or circumferential) direction of track body 37. In some cases, the body width *W_{B}* of body 30 may be longer than the body length *L_{B}* of body 30.

An edge portion extends from each end 36A, 36B of body 30. For example, first edge portion 38A extends from first end 36A, and second edge portion 38B extends from second end 36B. Each of first edge portion 38A and second edge portion 38B may define at least one protrusion 40A and 40B, respectively, that extends from a major surface 31 of body 30. Major surface 31 of body 30 may include one or more surfaces of core 29 that does not include edge portions 38A, 38B and/or any structures (e.g., a lug protrusion 32A, 32B or a lug channel 34 defined by body 30). In some examples, major surface 31 corresponds or aligns with a first side of track body 37 configured to engage with a drive system of a vehicle (e.g., similar to first side 14A of FIG 1).

The at least one protrusion 40A, 40B may be any suitable shape. For example, the at least one protrusion 40A, 40B of each edge portion 38A, 38B may have a square-like profile, a rounded profile, a triangular profile, or any other profile. In some examples, the at least one protrusion 40A, 40B of each edge portion 38A, 38B is the same shape and/or size for both edge portions 38A, 38B. In other examples, the shape and/or size of each protrusion 40A, 40B of each edge portion 38A, 38B may be different.

Each core 29 is embedded within track body 37 such that track body 37 encases the at least one protrusion 40A, 40B of each edge portion 38A, 38B. For example, track body 37 may substantially encompass or surround the at least one protrusion 40A, 40B, e.g., in direct contact with the at least one protrusion 40A, 40B. In some examples, core 29 encased by track body 37 may be more tightly held within track body 37 (and may move less relative to track body 37) in comparison to a core that is not encased by track body 37. In other examples, cores 29 may be embedded in track body 37 but not encased by track body 37. For example, core 29 may be embedded in a pocket defined by track body 37, but the pocket may not closely match a shape of or entirely surround one or more portions of core 29. In some of these examples, all portions of core 29 may not contact track body 37 at the same time. In examples in which track body 37 encases core 29, a pocket of track body 37 may closely correspond to a shape of core 29, such that the pocket corresponds relatively precisely to surround the shape and size of the at least one protrusion 40A, 40B. In some examples, core 29 encased by track body 37 may be less likely to separate from, or significantly move within, track body 37.

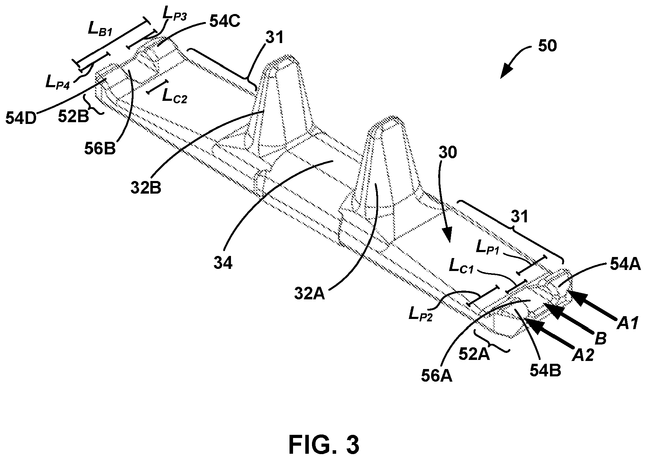

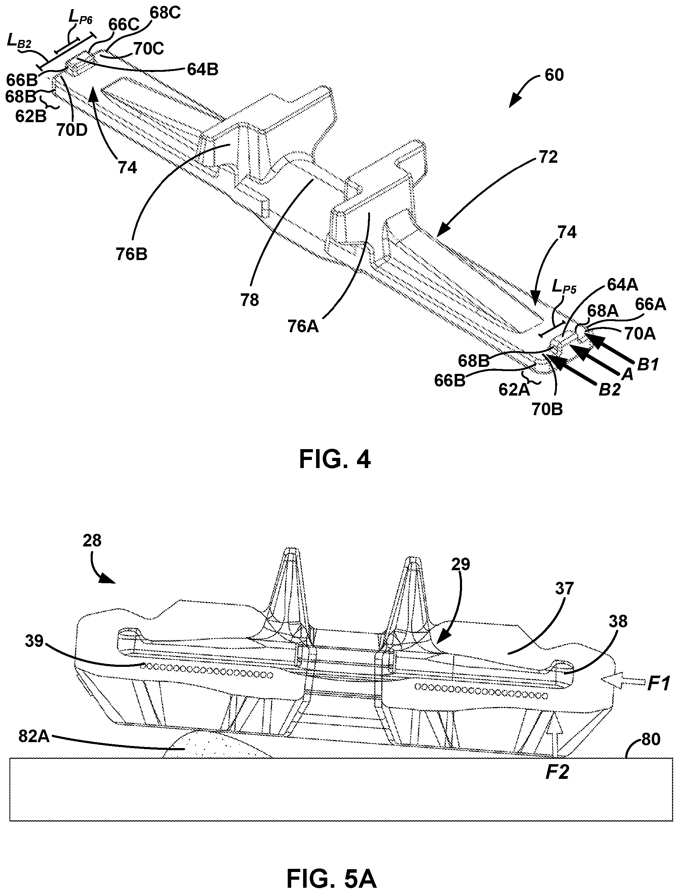

Each protrusion 40A, 40B has a protrusion width *W_{P}* that is less than the body width *W_{B}* of the respective body 30, the width being measured in a direction orthogonal to the respective lengths *L_{P},L_{B}.* As a result, each edge portion 38A, 38B may define a channel (FIG. 3), a side region (FIG. 4), or the like in addition to the at least one protrusion 40A, 40B. The channel or side region may enable track body 37 to at least partially deform relative to the at least one protrusion 40A, 40B in the direction of the channel or side region upon an application of force on track body 37. For example, upon an application of force on a side of track body 37 corresponding to a respective edge portion 38A, 38B, a portion of track body 37 may push against the at least one protrusion 40A, 40B and one or more other portions of track body 37 may flex around the at least one protrusion 40A, 40B in the direction of the channel or side region. In this way, each edge portion 38A, 38B is configured to both support track body 37 (e.g., by the at least one protrusion 40A, 40B) and allow track body 37 to at least partially deform around each protrusion 40A, 40B (e.g., by a channel or side region) upon the application of force on track body 37 on a side of track body 37 corresponding to one of first edge portion 38A or second edge portion 38B.

Plurality of cores 29 may define one or more structures of vehicle track 28 by being embedded in track body 37. For example, body 30 of core 29 may define one or more lug protrusions 32A, 32B that define guide lugs 33A, 33B. As illustrated in FIG. 2, body 30 defines a first lug protrusion 32A and a second lug protrusion 32B. Because plurality of cores 29 are embedded within track body 37, a shape of each core 29 may define a portion of a shape of vehicle track 28 (e.g., the portion of track body 37 surrounding the respective core 29). For example, lug protrusions 32A, 32B defined by body 30 may define guide lugs 33A, 33B of vehicle track 28. In this way, lug protrusions 32A, 32B, and guide lugs 33A, 33B defined by lug protrusions 32A, 32B, may be configured to align with a drive sprocket wheel (e.g., drive sprocket wheel 12 of FIG. 1) configured to rotate vehicle track 28. In some examples, body 30 may also define a lug channel 34, such as between first lug protrusion 32A and second lug protrusion 32B. Similar to lug protrusions 32A, 32B, lug channel 34 may define a portion of the shape of vehicle track 28. In the example of FIG. 2, lug channel 34 defines guide channel 35.

Lug protrusions 32A, 32B and lug channel 34 may be any suitable size or shape to fit particular needs and an intended use of vehicle track 28. For examples, lug protrusions 32A, 32B and lug channel 34 may be any suitable size or shape such that guide lugs 33A, 33B and guide channel 35 defined by lug protrusions 32A, 32B and lug channel 34 align with the drive sprocket wheel (e.g., drive sprocket wheel 12 of FIG. 1) that is configured to rotate vehicle track 28.

FIG. 3 is a perspective view of an example core 50 configured to be at least partially embedded in track body 14 of a vehicle track 10. Core 50 is an example of core 16 of FIG. 1 or core 29 of FIG. 2. In some examples, core 50 defines lug protrusions 32A, 32B and lug channel 34. In other examples, core 50 may define fewer or greater than two lug protrusions 32A, 32B, or core 50 may not define lug protrusions 32A, 32B. Similarly, core 50 may define greater than one lug channel 34, or core 50 may not define a lug channel 34.

Core 50 includes a first edge portion 52A and a second edge portion 52B. Each of first edge portion 52A and second edge portion 52B defines at least one protrusion that extends from major surface 31 of body 30. In the example of FIG. 3, first edge portion 52A defines two protrusions 54A and 54B, and second edge portion 52B defines two protrusions 54C and 54D. In some examples, when core 50 is incorporated into vehicle track 10, track body 14 may encase the two protrusions 54A-54D of each edge portion. Each of protrusions 54A-54D may help support track body 14 upon an application of force on track body 14. For example, protrusions 54A and 54B of first edge portion 52A may support track body 14 upon an application of force on a side of track body 14 corresponding to first edge portion 52A, such as an application of force in the direction of arrows *A1* and/or *A2.*

In some examples, support of track body 14 may include helping track body 14 maintain its shape, preventing track body 14 from collapsing or substantially deforming, maintaining engagement of track body 14 with a ground surface, or the like. The support of track body 14 by protrusions 54A-54D may result in increased stability of a vehicle mounted to vehicle track 10 and/or an increase in the useful life of vehicle track 10. Upon an application of force (e.g., in the direction of arrows *A1* and/or *A2*) on track body 14, track body 14 may be moved in the direction of arrows *A1* and/or *A2*, resulting in a portion of track body 14 being pushed against protrusions 54A and/or 54B. During this application of force in the direction of arrows *A1* and/or *A2*, track body 14 may be supported by protrusions 54A and 54B, which may help maintain the shape of track body 14 and prevent collapse or complete deformation of track body 14.

Each protrusion 54A-54D has a protrusion length that is less than the length of body 30 of core 50. For example, protrusion 54A has a protrusion length *L_{P1}* that is less body length *L_{B1},* protrusion 54B has a protrusion length *L_{P2}* that is less body length *L_{B1},* protrusion 54C has a protrusion length *L_{P3}* that is less body length *L_{B1},* and protrusion 54D has a protrusion length *L_{P4}* that is less body length *L_{B1}.* In the example of FIG. 3, each pair of protrusions 54A-54D defined by each of first edge portion 52A and second edge portion 52B have a combined protrusion length (e.g., *L_{P1}* + *L_{P2}* or *L_{P3}* + *L_{P4})* less than body length *L_{B1}.* In this way, each of first end portion 52A and second edge portion 52B may also define a channel between the respective pair of protrusions 54A-54D. For example, first edge portion 52A defines a channel 56A, and second edge portion 52B defines a channel 56B. Thus, when track body 14 encases each protrusion 54A-54D, track body 14 also extends through the channel 56A, 56B between each pair of protrusions 54A-54D to substantially encompass each protrusion 54A-54D.

Channels 56A and 56B may be any suitable shape and/or size to fit particular needs and an intended use of vehicle track 10. In some examples, a larger channel may enable track body 14 to deform and/or flex more than a smaller channel upon the application of a given force on a respective side of track body 14. On the other hand, in some examples, a larger channel may result in the two protrusions of the respective edge portion being smaller than those of an edge portion defining a smaller channel. The smaller protrusions may provide less support to track body 14 upon the application of force on a respective side of track body 14 in comparison to larger protrusions. In some examples, the length *L_{P1}, L_{P2}, L_{P3}, L_{P4}* of each respective protrusion 54A-54D may be greater than or equal to the length *L_{C1}, L_{C2}* of the respective channel 56A, 56B of the respective edge portion 52A, 52B. In other examples, the length *L_{P1}, L_{P2}, L_{P3}, L_{P4}* of each respective protrusion 54A-54D may be less than the length *L_{C1}, L_{C2}* of the respective channel 56A, 56B of the respective edge portion 52A, 52B.

In the example of FIG. 3, channels 56A, 56B are illustrated as being substantially centered in the respective first or second edge portion 52A, 52B along the body length *L_{B1}* of core 50. In other examples, at least one of channels 56A, 56B may not be substantially centered in the respective first or second edge portion 52A, 52B along the body length *L_{B1}* of core 50. This may occur if, for example, the protrusions 54A and 54B, or 54C and 54D of a given edge portion 52A or 52B have different lengths *L_{P1}* and *L_{P2},* or *L_{P3}* and *L_{P4},* respectively.

Each of channels 56A and 56B may enable track body 14 to at least partially deform around protrusions 54A-54D upon an application of force on track body 14. For example, channel 56A of first edge portion 52A may allow track body 14 to at least partially deform around protrusions 54A and 54B upon an application of force on a side of track body 14 corresponding to first edge portion 52A. Channel 56A may allow track body 14 to at least partially deform around protrusions 54A and 54B, such as deform toward channel 56A in the direction of arrow *B*, upon such an application of force in the direction of arrow *B*. In this way, track body 14 may be supported by protrusions 54A and 54B, while at least partially deforming around protrusions 54A and 54B (e.g., toward channel 56A). Similar to first edge portion 52A, protrusions 54C, 54D of second edge portion 52B may support track body 14 upon an application of force on a side of track body 14 corresponding to second edge portion 52B, and channel 56B of second edge portion 52B may enable track body 14 to deform around protrusions 54C, 54D upon the application of force in a direction toward channel 56B.

The combination of the support of track body 14 by protrusions 54A-54D and the at least partial deformation of track body 14 around protrusions 54A-54D toward channel 56A, 56B may increase the useful life of a vehicle track, such as vehicle track 10 of FIGS. 1 or 2. For example, the formation of cracks in track body 14, the widening or increase in size of cracks of track body 14, or other wear of track body 14 may be reduced or slowed. Additionally, or alternatively, the cores described herein may reduce, or even prevent, core 50 from separating from track body 14 (e.g., becoming not as embedded therein or reducing any adhesion between core 50 and track body 14). In some examples, if a core is separated from a track body, wear on the track body may be increased or accelerated. For example, an existing crack within the track body may become larger at a faster rate due to the movement of a core within track body 14 in comparison to vehicle track 10 in which the cores are more embedded or adhered to track body 14. Moreover, the separation of one or more cores 16 from track body 14 may result in reduced alignment and/or engagement with a drive sprocket wheel configured to rotate the vehicle track.

FIG. 4 is a perspective view of another example core 60 configured to be at least partially embedded in track body 14 of vehicle track 10. Core 60 is an example of core 16 from FIGS. 1 or 2. Core 60 may be used in vehicle track 10 with other types of cores, such as core 50 (FIG. 3), or only cores 60 having substantially identical (e.g., identical but for manufacturing variances) may be used in a particular vehicle track 10. In some examples, core 60 defines lug protrusions 76A, 76B and lug channel 78. In other examples, core 60 may define fewer or greater than two lug protrusions 76A, 76B, or core 60 may not define lug protrusions 76A, 76B. Similarly, core 60 may define greater than one lug channel 78, or core 60 may not define a lug channel 78.

Core 60 includes a first edge portion 62A and a second edge portion 62B on an opposite side of core 60 from first edge portion 62A. Each of first edge portion 62A and second edge portion 62B defines at least one protrusion that extends from major surface 74 of the respective body 72. In the example of FIG. 4, first edge portion 62A defines only one protrusion 64A, and second edge portion 62B defines only one protrusion 64B. In some examples, when core 60 is embedded in track body 14, track body 14 encases each protrusion 64A, 64B of each edge portion to substantially encompass each protrusion 64A, 64B. Each protrusion 64A,64B may support track body 14 upon an application of force on track body 14. For example, protrusion 64A of first edge portion 62A may support track body 14 upon an application of force on a side of track body 14 corresponding to first edge portion 62A, such as an application of force in the direction of arrow A. Upon such an application of force, track body 14 may be moved in the direction of arrow A, resulting in a portion of track body 14 being pushed against protrusion 64A. Similarly, protrusion 64B of second edge portion 62B may support track body 14 upon an application of force on a side of track body 14 corresponding to second edge portion 62B. In this way, track body 14 may be supported by protrusions 64A, 64B upon on application of force on track body 14, which may prevent collapse or complete deformation of track body 14.

Each protrusion 64A, 64B has a protrusion length that is less than the length *L_{B2}* of body 72 of core 60. For example, protrusion 64A has a protrusion length *L_{P5}* that is less body length *L_{B2},* and protrusion 64B has a protrusion length *L_{P6}* that is less body length *L_{B2}.* The body length *L_{B2}* of core 60 may extend between a first side surface 66A and a second side surface 66B of body 72, and the protrusion length *L_{P5}, L_{P6}* of each protrusion 64A, 64B may extend between a third side surface 68A and a fourth side surface 68B of the respective protrusion 64A, 64B. In some examples, third side surface 68A of protrusion 64A is offset from first side surface 66A of body 72. In this way, first edge portion 62A may define a first side region 70A proximate third side surface 68A (e.g., next to protrusion 64A). Additionally, or alternatively, fourth side surface 68B of protrusion 64A may be offset from second side surface 66B of body 72. In some such examples, first edge portion 62A may additionally, or alternatively, define a second side region 70B proximate fourth side surface 68B (e.g., next to protrusion 64A, but on the opposite side of first side region 70A). Edge portion 62B may define third side region 70C and fourth side region 70D similar to first and second side regions 70A, 70B. When track body 14 encases each protrusion 64A, 64B track body 14 also extends within each side region 70A-70D to surround and substantially encompass each protrusion 64A, 64B.

Each of side region 70A-70D may enable track body 14 to at least partially deform around protrusions 64A, 64B upon an application of force on track body 14. For example, side regions 70A and 70B of first edge portion 62A may allow track body 14 to at least partially deform around protrusions 64A upon an application of force on a side of track body 14 corresponding to first edge portion 62A. Side regions 70A, 70B may allow track body 14 to at least partially deform around protrusion 64A such that track body 14 deforms toward side region 70A, 70B in the direction of arrows *B1* and *B2*, upon such an application of force. In this way, track body 14 may be supported by protrusion 64A, while at least partially deforming around protrusion 64A (e.g., toward side regions 70A, 70B).

In the example of FIG. 4, second edge portion 62B includes side regions 70C, 70D similar to side regions 70A, 70B of first edge portion 62A. In turn, protrusion 64B may support track body 14 upon an application of force on a side of track body 14 corresponding to second edge portion 62B, and side regions 70C, 70D may enable track body 14 to deform around protrusion 64B upon the application of force in the direction of side regions 70C, 70D.

The combination of the support of track body 14 by protrusions 64A, 64B and the at least partial deformation of track body 14 around protrusions 64A, 64B toward side regions 70A-70D may increase the useful life of a vehicle track, such as vehicle track 10 of FIGS. 1 or 2. For example, the formation of cracks in track body 14, the widening or increase in size of cracks of track body 14, or other wear of track body 14 may be reduced. Additionally, or alternatively, the cores described herein may reduce, or even prevent, core 60 from separating from track body 14 (e.g., becoming not as embedded therein or reducing any adhesion between core 60 and track body 14).

In the example of FIG. 4, protrusions 64A, 64B are illustrated as being substantially centered in the respective first or second edge portion 62A, 62B along the body length *L_{B2}* of core 60. In other examples, at least one of protrusions 64A, 64B may not be substantially centered in the respective first or second edge portion 62A, 62B along the body length *L_{B2}* of core 60. Moreover, although illustrated as each of first and second edge portions 62A, 62B defining two side regions 70A, 70B or 70C, 70D, in some examples, first and/or second edge portions may define only one side region.

Although examples of cores with edge portions each including one or two protrusions, one channel, and/or two side regions were specifically described herein, each edge portion may define any number of protrusions having a protrusion length less than a body length, any number of channels, and/or any number of side regions. For example, one or both edge portions of a vehicle track core may define three protrusions and two channels. Moreover, the first edge portion and the second edge portion of a core may not be the same in some examples. As one example, a core may include a first edge portion similar to first edge portion 52A of FIG. 3 and a second edge portion similar to second edge portion 62B of FIG. 4.

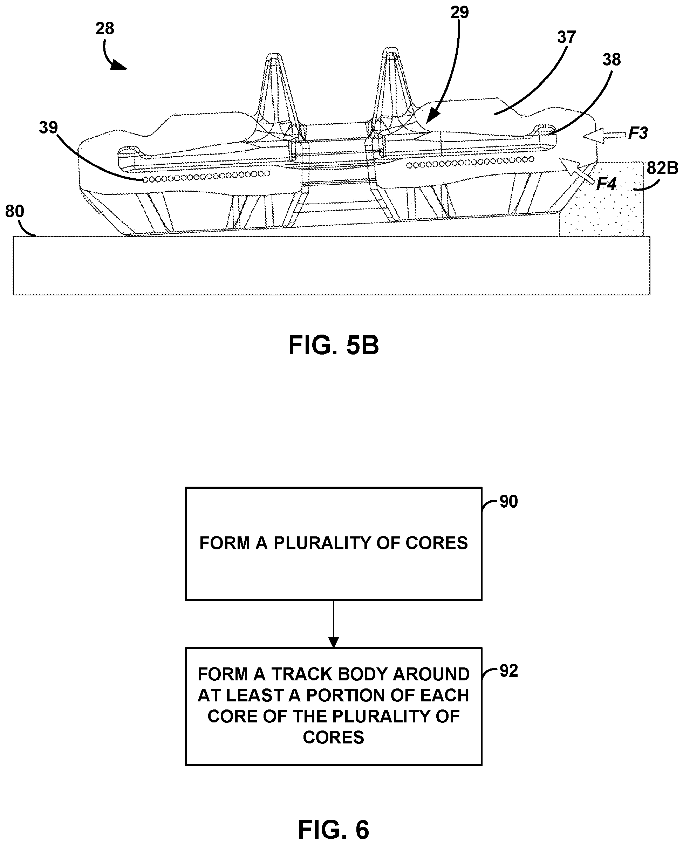

FIGS. 5A and 5B are perspective views of an example part of vehicle track 28 on a ground surface 80 including an obstruction 82A, 82B. FIGS. 5A and 5B illustrate a cutaway view of vehicle track 28 to show both track body 37 and core 29. In the examples of FIGS. 5A and 5B, a single core 29 is shown embedded in track body 37. However, vehicle track 28 may include a plurality of cores 29, as discussed with respect to FIG. 2. In some examples, ground surface 80 that vehicle track 28 engages with may not be entirely flat. For example, ground surface 80 may include obstruction 82A, 82B that vehicle track 28 encounters, as seen in FIGS. 5A and 5B. Obstruction 82A, 82B may include anything on ground surface 80 that may result in increased force on vehicle track 28, a change in the distribution of force on vehicle track 28, or the like. For example, such as in the example of FIG. 5A, obstruction 82A may be a rock, a bump in ground surface 80, debris, or the like. As another example, such as in the example of FIG. 5B, obstruction 82B may be a curb, a median, a barrier, or the like. In other examples, obstruction 82A, 82B may be of a different form.

Obstruction 82A, 82B may result in one or more increased forces applied on vehicle track 28, a change in a distribution of forces applied on vehicle track 28, or both. For example, as seen in FIG. 5A, obstruction 82A may result in one or more increased forces *F1, F2* applied on vehicle track 28. As one example, the increased forces *F1, F2* may be due to a change in the distribution of weight of the vehicle that is mounted on vehicle track 28. For example, due to vehicle track 28 contacting obstruction 82A, vehicle track 28 may no longer fully engage with ground surface 80. In some examples, vehicle track 28 that does not fully engage with ground surface 80 may shift the weight of the vehicle mounted to vehicle track 28 in the direction of the portion of vehicle track 28 still engaged with ground surface 80. In turn, the portion of vehicle track 28 engaged with ground surface 80 may be subject to an application of increased forces *F1, F2.* Additionally, or alternatively, vehicle track 28 contacting obstruction 82A, 82B itself may apply an increased force on vehicle track 28. For example, in the example of FIG. 5B, vehicle track 28 contacting obstruction 82B results in an application of increased forces *F3*, *F4* on vehicle track 28.

The application of increased forces *F1, F2, F3,* and/or *F4* on vehicle track 28 may put additional stress on vehicle track 28, which, in some examples, may increase or accelerate the wear of vehicle track 28. For example, the formation of cracks in the track body 37, widening of cracks in the track body 37, separation of core 29 from track body 37, or the like may be increased or accelerated due to the additional stress. In some examples, the use of core 29 including first and second edge portions 38A, 38B (or the other cores described herein) may help mitigate the effects of the additional stress on vehicle track 28, such as added stress due to obstruction 82A, 82B. For example, edge portion 38A, 38B (e.g., at least one protrusion 40A, 40B of each edge portion 38A, 38B) may support track body 37 upon the application of increased forces *F1, F2, F3,* and/or *F4* on track body 37. Edge portion 38A, 38B (e.g., a channel or a side region of each edge portion 38A, 38B) may also allow track body 37 to at least partially deform (e.g., around the at least one protrusion 40A, 40B of each edge portion 38A, 38B). The partial deformation of track body 37 relative to the at least one protrusion 40A, 40B may help distribute the stress due to the increased forces *F1, F2, F3*, and/or *F4* to other portions of track body 37, which may minimize a stress point of track body 37 due to the increased forces *F1, F2, F3,* and/or *F4.* For example, rather than the stress from forces *F1, F2, F3,* and/or *F4* and from track body 37 pushing against the at least one protrusion 40A, 40B being relatively confined to edge portion 38A, 38B, the flexibility of track body 37 relative to the at least one protrusion 40A, 40B may help distribute the stress across track body 37. In this way, track body 37 is prevented from fully deforming or collapsing, and is also able to have some flexibility under the application of increased forces *F1, F2, F3,* and/or *F7*, reducing the stress on track body 37 (or on at least a portion of track body 37).

FIG. 6 is a flow diagram illustrating an example technique of forming a vehicle track. The technique of FIG. 6 will be described with respect to vehicle track 10 and track body 28 of FIG. 2. In other examples, however, the technique of FIG. 6 may be used form a vehicle track including a track body other than vehicle track 10 including track body 28.

The technique of FIG. 6 includes forming a plurality of cores 29 (90). Each core 29 may be formed to include body 30 including first end 36A and second end 36B opposite first end 36A. Body 30 may have a body width *W_{B}* measured along a first axis *A* extending between first end 36A and second end 36B, and a body length *L_{B}* measured along a second axis *B* orthogonal to the first axis *A.* Each core 29 may also include first edge portion 38A extending from first end 36A of body 30, and second edge portion 38B extending from second end 36B of body 30. Edge portions 38A, 38B each define at least one protrusion 40A, 40B that extends from major surface 31 of body 30, and the at least one protrusion 40A, 40B may have a protrusion length *L_{P}* that is less than body length *L_{B}.*

In some examples, the plurality of cores 29 include a metal. In some such examples, each core 29 of the plurality of cores 29 may include a single, continuous piece of metal. In other examples, each core 29 may be composed of two or more sections and attached together to form body 30 and/or edge portions 38A, 38B of core 29.

The plurality of cores 29 may be formed using any suitable technique. For example, the plurality of cores 29 may be formed using a hot forging technique, a metal rod technique, a casting technique, or another technique. In some examples, the shape of core 29 may be easier to control using a casting technique, and the consistency of the quality of cores 29 may be easier to control using a hot forging technique.

In some examples, the technique of FIG. 6 may include cleaning the plurality of cores 29 after forming. For example, the plurality of cores 29 may be cleaned using a chemical cleaning technique. Additionally, or alternatively, the plurality of cores 29 may be cleaned using a mechanical technique, such as by using a brush, a sponge, a towel, or the like to remove debris and/or residue from the plurality of cores 29. The technique of FIG. 6 may also include applying an adhesive and/or a primer to the plurality of cores 29. For example, a rubber-metal adhesive and/or primer such as Chemlok^{®} 205 Primer or Adhesive commercially available from LORD Corporation of Cary, North Carolina can be applied to the plurality of cores 29 to help promote adhesion between the plurality of cores 29 and track body 37. In some examples, the plurality of cores 29 may be dried after the adhesive and/or primer is applied.

The technique of FIG. 6 further includes forming track body 37 around at least a portion of each core 29 of the plurality of cores 29 (92). In this way, each core 29 of the plurality of cores 29 may be at least partially embedded within track body 37. In some examples, forming track body 37 around at least a portion of each core 29 of the plurality of cores 29 includes encasing the at least one protrusion 40A, 40B of each of first edge portion 38A and second edge portion 38B in track body 37. In examples in which first edge portion 38A and second edge portion 38B each define two protrusions and a channel between the two protrusions (FIG. 3), encasing the at least one protrusion 40A, 40B of each of first edge portion 38A and second edge portion 38B in track body 37 includes encasing the two protrusions in track body 37 and forming track body 37 through the channel. In examples, in which first edge portion 38A and second edge portion 38B each define only one protrusion and two side regions proximate each side surface of the respective protrusion (FIG. 4), encasing the at least one protrusion 40A, 40B of each of first edge portion 38A and second edge portion 38B in track body 37 includes encasing the one protrusion in track body 37 and forming track body 37 within the two side regions of the respective first or second edge portion. In either case, encasing the at least one protrusion 40A, 40B in track body 37 may result in track body 37 substantially encompassing the at least one protrusion 40A, 40B of each edge portion 38A, 38B.

Track body 37 may include an elastomer, such as a natural rubber, a synthetic rubber, or another elastomeric material. In examples in which track body 37 includes a natural or a synthetic rubber, forming track body 37 around at least a portion of each core 29 of the plurality of cores 29 may include a vulcanization technique. In some examples, forming track body 37 around at least a portion of each core 29 of the plurality of cores 29 may include a molding technique.

## Claims

1. A vehicle track core (16, 29, 50, 60) comprising:
a body (30) comprising a first end (36A) and a second end (36B) opposite the first end (36A), the body (30) having a body width (W_{B}) measured along a first axis (A) extending between the first and second ends (36A,36B), and a body length (L_{B}, L_{B1}, L_{B2}) measured along a second axis (B) orthogonal to the first axis;
a first edge portion (38A, 52A, 62A) extending from the first end (36A) of the body (30); and
a second edge portion (38B, 52B, 62B) extending from the second end (36B) of the body (30), wherein each of the first and second edge portions defines at least one protrusion (40A, 40B, 54A, 54B, 54C, 54D, 64A, 64B) that extends from a major surface (31, 74) of the respective body (30), the at least one protrusion having a protrusion length (L_{P1}, L_{P2}, L_{P3}, L_{P4}, L_{P5}, L_{P6}) that is less than the body length (L_{B}, L_{B1}, L_{B2}), and wherein the at least one protrusion has a non-rounded profile,
wherein the first edge portion (38A, 52A, 62A) and the second edge portion (38B, 52B, 62B) each comprise a respective first side surface (66A) and a respective second side surface (66B),
wherein the at least one protrusion of at least one of the first end portion or the second end portion comprises at least two protrusions (54A, 54B, 54C, 54D) or one protrusion (64A, 64B) offset from the first and second side surfaces (66A,66B) of the respective edge portion, and
wherein the vehicle track core is configured to be at least partially embedded within a track body (14, 37) of a vehicle track (10, 28).

2. The vehicle track core (16, 29, 50, 60) of claim 1, wherein the at least one of the first edge portion or the second edge portion defines (54A, 54B, 54C, 54D), wherein the respective first or second edge portions defines a channel (56A, 56B) between the two protrusions.

3. The vehicle track core (16, 29, 50, 60) of claim 1 or 2, wherein:
the at least one of the first edge portion (38A, 52A, 62A) or the second edge portion (38B, 52B, 62B) defines only one protrusion (64A, 64B), the one protrusion comprising a third side surface (68A) and a fourth side surface (68B);
the respective first (38A, 52A, 62A) or second edge portion (38B, 52B, 62B) defining two side regions (70A, 70B, 70C, 70D), wherein a first side region (70A, 70C) of the two side regions is proximate the third side surface (68A), and a second side region (70B, 70D) of the two side regions is proximate the fourth side surface (68B), such that the third and fourth side surfaces (68A,68B) are offset from the respective first and second side surfaces (66A,66B) of the respective first and second edge portions (38A, 52A, 62A, 38B, 52B, 62B).

4. The vehicle track core (16, 29, 50, 60) of any of claims 1 to 3, wherein at least one of:
the body defines at least one lug protrusion (32A, 32B, 76A, 76B) configured to align with a drive sprocket wheel (12) configured to rotate the vehicle track; and/or
the vehicle track core (16, 29, 50, 60) comprises a metal, optionally, wherein the vehicle track core (16, 29, 50, 60) comprises a single, continuous piece of metal.

5. A method of forming a vehicle track (10, 28), the method comprising:
forming a plurality of cores (16, 29, 50, 60), wherein each core (16, 29, 50, 60) of the plurality of cores (16, 29, 50, 60) comprises:
a body (30) comprising a first end (36A) and a second end (36B) opposite the first end, the body having a body width (W_{B}) measured along a first axis (A) extending between the first and second ends, and a body length (L_{B}, L_{B1}, L_{B2}) measured along a second axis (B) orthogonal to the first axis (A);
a first edge portion (38A, 52A, 62A) extending from the first end of the body (30); and
a second edge portion (38B, 52B, 62B) extending from the second end of the body (30),
wherein each of the first and second edge portions (38B, 52B, 62B, 38B, 52B, 62B) defines at least one protrusion (40A, 40B, 54A, 54B, 54C, 54D, 64A, 64B) that extends from a major surface (31, 74) of the respective body (30), the at least one protrusion having a non-rounded profile and a protrusion length (L_{P1}, L_{P2}, L_{P3}, Lp₄, L_{P5}, L_{P6}) that is less than the body length (L_{B}, L_{B1}, L_{B2}),
wherein the first edge portion and the second edge portion (38A, 52A, 62A, 38B, 52B, 62B) each comprise a respective first side surface (66A) and a respective second side surface (66B),
wherein the at least one protrusion of at least one of the first end portion or the second end portion comprises at least two protrusions (54A, 54B, 54C, 54D) or one protrusion (64A, 64B) offset from the first and second side surfaces (66A,66B) of the respective edge portion; and
forming a track body (14) around at least a portion of each core (16, 29, 50, 60) of the plurality of cores (16, 29, 50, 60) such that each core (16, 29, 50, 60) of the plurality of cores (16, 29, 50, 60) is at least partially embedded within the track body (30).

6. The method of claim 5, wherein:
forming the track body (30) around at least the portion of each core (16, 29, 50, 60) of the plurality of cores (16, 29, 50, 60) comprises encasing the at least one protrusion of each of the first edge portion (38A, 52A, 62A) and the second portion (38B, 52B, 62B) in the track body (30); and
the at least one of the first edge portion (38A, 52A, 62A) or the second edge portions (38B, 52B, 62B) defines two protrusions (54A, 54B, 54C, 54D), wherein the respective first or second edge portions (38A, 52A, 62A, 38B, 52B, 62B) defines a channel (56A, 56B) between the two protrusions, and wherein encasing the at least one protrusion of each of the first edge portion (38A, 52A, 62A) and the second edge portion (38B, 52B, 62B) in the track body (30) comprises encasing the two protrusions in the track body (30) and forming the track body (30) through the channel (56A, 56B).

7. The method of claim 5, wherein:
forming the track body (30) around at least the portion of each core (16, 29, 50, 60) of the plurality of cores (16, 29, 50, 60) comprises encasing the at least one protrusion of each of the first edge portion (38A, 52A, 62A) and the second portion (38B, 52B, 62B) in the track body (30),
the at least one of the first edge portion (38A, 52A, 62A) or the second edge portion (38B, 52B, 62B) defines only one protrusion (64A, 64B), the one protrusion comprising a third side surface (68A) and a fourth side surface (68B);
the respective first or second edge portion (38A, 52A, 62A, 38B, 52B, 62B) defining two side regions (70A, 70B, 70C, 70D), wherein a first side region (70A, 70C) of the two side regions (70A, 70B, 70C, 70D) is proximate the third side surface (68A), and a second side region (70B, 70D) of the two side regions (70A, 70B, 70C, 70D) is proximate the fourth side surface (68B), such that the third and fourth side surfaces (68A,68B) are offset from the respective first and second side surfaces (66A,66B) of the respective first and second edge portions (38A, 52A, 62A, 38B, 52B, 62B); and
encasing the at least one protrusion of each of the first edge portion (38A, 52A, 62A) and the second edge portion (38B, 52B, 62B) in the track body (30) comprises encasing the one protrusion in the track body (30) and forming the track body (30) within the two side regions (70A, 70B, 70C, 70D) of the respective first or second edge portion (38A, 52A, 62A, 38B, 52B, 62B).

8. The method of any of claims 5 to 7, further comprising, prior to forming the track body (30) around at least a portion of each core (16, 29, 50, 60), applying an adhesive or a primer to the plurality of cores (16, 29, 50, 60).

## Patentansprüche

1. Fahrzeugkettenkern (16, 29, 50, 60) mit:
einem Körper (30), der ein erstes Ende (36A) und ein zweites Ende (36B), das dem ersten Ende (36A) entgegengesetzt ist, aufweist, wobei der Körper (30) eine Körperbreite (W_{B}), die entlang einer ersten Achse (A), die sich zwischen dem ersten und zweiten Ende (36A, 36B) erstreckt, gemessen wird, und eine Körperlänge (L_{B}, L_{B1}, L_{B2}) hat, die entlang einer zweiten Achse (B), die senkrecht zu der ersten Achse ist, gemessen wird;
einem ersten Randabschnitt (38A, 52A, 62A), der sich von dem ersten Ende (36A) des Körpers (30) erstreckt; und
einem zweiten Randabschnitt (38B, 52B, 62B), der sich von dem zweiten Ende (36B) des Körpers (30) erstreckt, wobei jeder der ersten und zweiten Randabschnitte zumindest einen Vorsprung (40A, 40B, 54A, 54B, 54C, 54D, 64A, 64B), der sich von einer Hauptoberfläche (31, 74) des jeweiligen Körpers (30) erstreckt, definiert, wobei der zumindest eine Vorsprung eine Vorsprungslänge (L_{P1}, L_{P2}, L_{P3}, L_{P4}, L_{P5}, L_{P6}), die kleiner als die Körperlänge (L_{B}, L_{B1}, L_{B2}) ist, hat, und wobei der zumindest eine Vorsprung ein nicht abgerundetes Profil hat,
wobei der erste Randabschnitt (38A, 52A, 62A) und der zweite Randabschnitt (38B, 52B, 62B) jeweils eine entsprechende erste Seitenfläche (66A) und eine entsprechende zweite Seitenfläche (66B) aufweisen,
wobei der zumindest einen Vorsprung von zumindest einem der Endabschnitte, erster Endabschnitt oder zweiter Endabschnitt, zumindest zwei Vorsprünge (54A, 54B, 54C, 54D) oder einen Vorsprung (64A, 64B), der von der ersten und der zweiten Seitenfläche (66A, 66B) des jeweiligen Randabschnitts versetzt ist, aufweist, und
wobei der Fahrzeugkettenkern konfiguriert ist, um zumindest teilweise in einen Kettenkörper (14, 37) einer Fahrzeugkette (10, 28) eingebettet zu sein.

2. Fahrzeugkettenkern (16, 29, 50, 60) nach Anspruch 1, wobei der zumindest eine der Randabschnitte, erster Randabschnitt oder zweiter Randabschnitt, (54A, 54B, 54C, 54D) definiert,
wobei der jeweilige erste oder zweite Randabschnitt einen Kanal (56A, 56B) zwischen den zwei Vorsprüngen definiert.

3. Fahrzeugkettenkern (16, 29, 50, 60) nach Anspruch 1 oder 2, wobei:
der zumindest eine der Randabschnitte, erster Randabschnitt (38A, 52A, 62A) oder zweiter Randabschnitt (38B, 52B, 62B), nur einen Vorsprung (64A, 64B) definiert, wobei der eine Vorsprung eine dritte Seitenfläche (68A) und eine vierte Seitenfläche (68B) aufweist;
wobei der jeweilige erste (38A, 52A, 62A) oder zweite Randabschnitt (38B, 52B, 62B) zwei Seitenbereiche (70A, 70B, 70C, 70D) definiert, wobei ein erster Seitenbereich (70A, 70C) der zwei Seitenbereiche in der Nähe der dritten Seitenfläche (68A) liegt, und ein zweiter Seitenbereich (70B, 70D) der zwei Seitenbereiche in der Nähe der vierten Seitenfläche (68B) liegt, so dass die dritten und vierten Seitenflächen (68A, 68B) von den jeweiligen ersten und zweiten Seitenflächen (66A, 66B) der jeweiligen ersten und zweiten Randabschnitte (38A, 52A, 62A, 38B, 52B, 62B) versetzt sind.

4. Fahrzeugkettenkern (16, 29, 50, 60) nach einem der Ansprüche 1 bis 3, wobei zumindest eines von
dem Körper zumindest einen Nasenvorsprung (32A, 32B, 76A, 76B) definiert, der konfiguriert ist, um mit einem Antriebskettenrad (12), das konfiguriert ist, um die Fahrzeugkette zu drehen, ausgerichtet zu sein; und/oder
dem Fahrzeugkettenkern (16, 29, 50, 60) optional ein Metall aufweist, wobei der Fahrzeugkettenkern (16, 29, 50, 60) ein einzelnes, durchgehendes Stück Metall aufweist.

5. Verfahren zum Ausbilden einer Fahrzeugkette (10, 28), wobei das Verfahren aufweist:
Ausbilden einer Mehrzahl von Kernen (16, 29, 50, 60), wobei jeder Kern (16, 29, 50, 60) der Mehrzahl von Kernen (16, 29, 50, 60) aufweist:
einen Körper (30), der ein erstes Ende (36A) und ein zweites Ende (36B), das dem ersten Ende entgegengesetzt ist, aufweist, wobei der Körper eine Körperbreite (W_{B}), die entlang einer ersten Achse (A), die sich zwischen dem ersten und zweiten Ende erstreckt, gemessen wird, und eine Körperlänge (L_{B}, L_{B1}, L_{B2}) hat, die entlang einer zweiten Achse (B), die senkrecht zu der ersten Achse (A) ist, gemessen wird;
einen ersten Randabschnitt (38A, 52A, 62A), der sich von dem ersten Ende des Körpers (30) erstreckt; und
einen zweiten Randabschnitt (38B, 52B, 62B), der sich von dem zweiten Ende des Körpers (30) erstreckt,
wobei jeder der ersten und zweiten Randabschnitte (38B, 52B, 62B, 38B, 52B, 62B) zumindest einen Vorsprung (40A, 40B, 54A, 54B, 54C, 54D, 64A, 64B), der sich von einer Hauptoberfläche (31, 74) des jeweiligen Körpers (30) erstreckt, definiert, wobei der zumindest eine Vorsprung ein nicht abgerundetes Profil und eine Vorsprungslänge (L_{P1}, L_{P2}, L_{P3}, L_{P4}, L_{P5}, L_{P6}), die kleiner als die Körperlänge (L_{B}, L_{B1}, L_{B2}) ist, hat,
wobei der erste Randabschnitt und der zweite Randabschnitt (38A, 52A, 62A, 38B, 52B, 62B) jeweils eine entsprechende erste Seitenfläche (66A) und eine entsprechende zweite Seitenfläche (66B) aufweisen,
wobei der zumindest eine Vorsprung von zumindest einem der Endabschnitte, erster Endabschnitt oder zweiter Endabschnitt, zumindest zwei Vorsprünge (54A, 54B, 54C, 54D) oder einen Vorsprung (64A, 64B), der von der ersten und der zweiten Seitenfläche (66A, 66B) des jeweiligen Randabschnitts versetzt ist, aufweist; und
Ausbilden eines Kettenkörpers (14) um zumindest einen Abschnitt jedes Kerns (16, 29, 50, 60) der Mehrzahl von Kernen (16, 29, 50, 60) herum, so dass jeder Kern (16, 29, 50, 60) der Mehrzahl von Kernen (16, 29, 50, 60) zumindest teilweise in den Kettenkörper (30) eingebettet ist.

6. Verfahren nach Anspruch 5, wobei:
das Ausbilden des Kettenkörpers (30) um zumindest den Abschnitt jedes Kerns (16, 29, 50, 60) der Mehrzahl von Kernen (16, 29, 50, 60) herum ein Einschließen des zumindest einen Vorsprungs von jedem der Randabschnitte, erster Randabschnitt (38A, 52A, 62A) und zweiter Abschnitt (38B, 52B, 62B), in dem Kettenkörper (30) aufweist; und
der zumindest eine der Randabschnitte, erster Randabschnitt (38A, 52A, 62A) oder zweiter Randabschnitt (38B, 52B, 62B), zwei Vorsprünge (54A, 54B, 54C, 54D) definiert, wobei der jeweilige erste oder zweite Randabschnitt (38A, 52A, 62A, 38B, 52B, 62B) einen Kanal (56A, 56B) zwischen den zwei Vorsprüngen definiert, und wobei das Einschließen des zumindest einen Vorsprungs von jedem der Randabschnitte, erster Randabschnitt (38A, 52A, 62A) und zweiter Randabschnitt (38B, 52B, 62B), in dem Kettenkörper (30) ein Einschließen der zwei Vorsprünge in dem Kettenkörper (30) und ein Ausbilden des Kettenkörpers (30) durch den Kanal (56A, 56B) aufweist.

7. Verfahren nach Anspruch 5, wobei:
das Ausbilden des Kettenkörpers (30) um zumindest den Abschnitt jedes Kerns (16, 29, 50, 60) der Mehrzahl von Kernen (16, 29, 50, 60) herum das Einschließen des zumindest einen Vorsprungs von jedem der Randabschnitte, erster Randabschnitt (38A, 52A, 62A) und zweiter Abschnitt (38B, 52B, 62B), in dem Kettenkörper (30) aufweist,
der zumindest eine der Randabschnitte, erster Randabschnitt (38A, 52A, 62A) oder zweiter Randabschnitt (38B, 52B, 62B), nur einen Vorsprung (64A, 64B) definiert, wobei der eine Vorsprung eine dritte Seitenfläche (68A) und eine vierte Seitenfläche (68B) aufweist;
wobei der jeweilige erste oder zweite Randabschnitt (38A, 52A, 62A, 38B, 52B, 62B) zwei Seitenbereiche (70A, 70B, 70C, 70D) definiert, wobei ein erster Seitenbereich (70A, 70C) der zwei Seitenbereiche (70A, 70B, 70C, 70D) in der Nähe der dritten Seitenfläche (68A) liegt, und ein zweiter Seitenbereich (70B, 70D) der zwei Seitenbereiche (70A, 70B, 70C, 70D) in der Nähe der vierten Seitenfläche (68B) liegt, so dass die dritten und vierten Seitenflächen (68A, 68B) von den jeweiligen ersten und zweiten Seitenflächen (66A, 66B) der jeweiligen ersten und zweiten Randabschnitte (38A, 52A, 62A, 38B, 52B, 62B) versetzt sind; und
das Einschließen des zumindest einen Vorsprungs von jedem der Randabschnitte, erster Randabschnitt (38A, 52A, 62A) und zweiter Randabschnitt (38B, 52B, 62B), in dem Kettenkörper (30) ein Einschließen des einen Vorsprungs in dem Kettenkörper (30) und ein Ausbilden des Kettenkörpers (30) innerhalb der zwei Seitenbereiche (70A, 70B, 70C, 70D) des jeweiligen ersten oder zweiten Randabschnitts (38A, 52A, 62A, 38B, 52B, 62B) aufweist.

8. Verfahren nach Anspruch nach einem der Ansprüche 5 bis 7, ferner aufweisend, vor dem Ausbilden des Kettenkörpers (30) um zumindest einen Abschnitt jedes Kerns (16, 29, 50, 60) herum, ein Auftragen eines Klebstoffs oder einer Grundierung auf die Mehrzahl von Kernen (16, 29, 50, 60).

## Revendications

1. Noyau de chenille (16, 29, 50, 60) de véhicule comprenant :
un corps (30) comprenant une première extrémité (36A) et une seconde extrémité (36B) opposée à la première extrémité (36A), le corps (30) ayant une largeur de corps (W_{B}) mesurée le long d'un premier axe (A) s'étendant entre les première et seconde extrémités (36A, 36B), et une longueur de corps (L_{B}, L_{B1}, L_{B2}) mesurée le long d'un second axe (B) orthogonal au premier axe ;
une première partie de bord (38A, 52A, 62A) s'étendant à partir de la première extrémité (36A) du corps (30) ; et
une seconde partie de bord (38B, 52B, 62B) s'étendant à partir de la seconde extrémité (36B) du corps (30), dans lequel chacune des première et seconde parties de bord définit au moins une saillie (40A, 40B, 54A, 54B, 54C, 54D, 64A, 64B) qui s'étend à partir d'une surface majeure (31, 74) du corps (30) respectif, la au moins une saillie ayant une longueur de saillie (L_{P1}, L_{P2}, L_{P5}, L_{P4}, L_{P5}, L_{P6}) qui est inférieure à la longueur de corps (L_{B}, L_{B1}, L_{B2}), et dans lequel la au moins une saillie a un profil non arrondi,
dans lequel la première partie de bord (38A, 52A, 62A) et la seconde partie de bord (38B, 52B, 62B) comprennent chacune une première surface latérale (66A) respective et une deuxième surface latérale (66B) respective,
dans lequel la au moins une saillie d'au moins l'une parmi la première partie d'extrémité ou la seconde partie d'extrémité comprend au moins deux saillies (54A, 54B, 54C, 54D) ou une saillie (64A, 64B) décalée(s) des première et deuxième surfaces latérales (66A, 66B) de la partie de bord respective, et
dans lequel le noyau de chenille de véhicule est configuré pour être au moins partiellement intégré dans un corps de chenille (14, 37) d'une chenille (10, 28) de véhicule.

2. Noyau de chenille (16, 29, 50, 60) de véhicule selon la revendication 1, dans lequel la au moins une parmi la première partie de bord ou la seconde partie de bord définit (54A, 54B, 54C, 54D), dans lequel la première ou seconde partie de bord respective définit un canal (56A, 56B) entre les deux saillies.

3. Noyau de chenille (16, 29, 50, 60) de véhicule selon la revendication 1 ou 2, dans lequel :
la au moins parmi la première partie de bord (38A, 52A, 62A) ou la seconde partie de bord (38B, 52B, 62B) définit une seule saillie (64A, 64B), la une saillie comprenant une troisième surface latérale (68A) et une quatrième surface latérale (68B) ;
la première (38A, 52A, 62A) ou seconde partie de bord (38B, 52B, 62B) respective définissant deux régions latérales (70A, 70B, 70C, 70D), dans lequel une première région latérale (70A, 70C) des deux régions latérales est à proximité de la troisième surface latérale (68A) et la seconde région latérale (70B, 70D) des deux régions latérales est à proximité de la quatrième surface latérale (68B), de sorte que les troisième et quatrième surfaces latérales (68A, 68B) sont décalées des première et deuxième surfaces latérales (66A, 66B) respectives des première et seconde parties de bord (38A, 52A, 62A, 38B, 52B, 62B) respectives.

4. Noyau de chenille (16, 29, 50, 60) de véhicule selon l'une quelconque des revendications 1 à 3, dans lequel au moins l'un parmi :
le corps définit au moins une saillie de patte (32A, 32B, 76A, 76B) configurée pour s'aligner avec une roue dentée d'entraînement (12) configurée pour faire tourner la chenille de véhicule ; et/ou
le noyau de chenille (16, 29, 50, 60) de véhicule comprend un métal, facultativement, dans lequel le noyau de chenille (16, 29, 50, 60) de véhicule comprend une seule pièce de métal continue.

5. Procédé pour former une chenille (10, 28) de véhicule, le procédé comprenant les étapes consistant à :
former une pluralité de noyaux (16, 29, 50, 60), dans lequel chaque noyau (16, 29, 50, 60) de la pluralité de noyaux (16, 29, 50, 60) comprend :
un corps (30) comprenant une première extrémité (36A) et une seconde extrémité (36B) opposée à la première extrémité, le corps ayant une largeur de corps (W_{B}) mesurée le long d'un premier axe (A) s'étendant entre les première et seconde extrémités, et une longueur de corps (L_{B}, L_{B1}, L_{B2}) mesurée le long d'un second axe (B) orthogonal au premier axe (A) ;
une première partie de bord (38A, 52A, 62A) s'étendant à partir de la première extrémité du corps (30) ; et
une seconde partie de bord (38B, 52B, 62B) s'étendant à partir de la seconde extrémité du corps (30),
dans lequel chacune des première et seconde parties de bord (38B, 52B, 62B, 38B, 52B, 62B) définit au moins une saillie (40A, 40B, 54A, 54B, 54C, 54D, 64A, 64B) qui s'étend à partir d'une surface majeure (31, 74) du corps (30) respectif, la au moins une saillie ayant un profil non arrondi et une longueur de saillie (L_{P1}, L_{P2}, L_{P5}, L_{P4}, L_{P5}, L_{P6}) qui est inférieure à la longueur de corps (L_{B}, L_{B1}, L_{B2}),
dans lequel la première partie de bord et la seconde partie de bord (38A, 52A, 62A, 38B, 52B, 62B) comprennent chacune une première surface latérale (66A) respective et une deuxième surface latérale (66B) respective,
dans lequel la au moins une saillie d'au moins l'une parmi la première partie d'extrémité ou de la seconde partie d'extrémité comprend au moins deux saillies (54A, 54B, 54C, 54D) ou une saillie (64A, 64B) décalée(s) des première et deuxième surfaces latérales (66A, 66B) de la partie de bord respective ; et
former un corps de chenille (14) autour d'au moins une partie de chaque noyau (16, 29, 50, 60) de la pluralité de noyaux (16, 29, 50, 60), de sorte que chaque noyau (16, 29, 50, 60) de la pluralité de noyaux (16, 29, 50, 60) est au moins partiellement intégré dans le corps de chenille (30).

6. Procédé selon la revendication 5, dans lequel :
l'étape consistant à former le corps de chenille (30) autour d'au moins la partie de chaque noyau (16, 29, 50, 60) de la pluralité de noyaux (16, 29, 50, 60) comprend l'étape consistant à enfermer la au moins une saillie de chacune parmi la première partie de bord (38A, 52A, 62A) et la seconde partie (38B, 52B, 62B) dans le corps de chenille (30) ; et
la au moins une parmi la première partie de bord (38A, 52A, 62A) ou les secondes parties de bord (38B, 52B, 62B) définit deux saillies (54A, 54B, 54C, 54D), dans lequel la première ou seconde partie de bord (38A, 52A, 62A, 38B, 52B, 62B) respective définit un canal (56A, 56B) entre les deux saillies, et dans lequel l'étape consistant à enfermer la au moins une saillie de chacune parmi la première partie de bord (38A, 52A, 62A) et la seconde partie de bord (38B, 52B, 62B) dans le corps de chenille (30) comprend l'étape consistant à enfermer les deux saillies dans le corps de chenille (30) et l'étape consistant à former le corps de chenille (30) à travers le canal (56A, 56B).

7. Procédé selon la revendication 5, dans lequel :
l'étape consistant à former le corps de chenille (30) autour d'au moins la partie de chaque noyau (16, 29, 50, 60) de la pluralité de noyaux (16, 29, 50, 60) comprend l'étape consistant à enfermer la au moins une saillie de chacune parmi la première partie de bord (38A, 52A, 62A) et la seconde partie (38B, 52B, 62B) dans le corps de chenille (30),
la au moins une parmi la première partie de bord (38A, 52A, 62A) ou la seconde partie de bord (38B, 52B, 62B) définit une seule saillie (64A, 64B), la une saillie comprenant une troisième surface latérale (68A) et une quatrième surface latérale (68B) ;
la première ou seconde partie de bord (38A, 52A, 62A, 38B, 52B, 62B) respective définissant deux régions latérales (70A, 70B, 70C, 70D), dans lequel une première région latérale (70A, 70C) des deux régions latérales (70A, 70B, 70C, 70D) est à proximité de la troisième surface latérale (68A), et une seconde région latérale (70B, 70D) des deux régions latérales (70A, 70B, 70C, 70D) est à proximité de la quatrième surface latérale (68B), de sorte que les troisième et quatrième surfaces latérales (68A, 68B) sont décalées des première et deuxième surfaces latérales (66A, 66B) respectives des première et seconde parties de bord (38A, 52A, 62A, 38B, 52B, 62B) respectives ; et
l'étape consistant à enfermer la au moins une saillie de chacune parmi la première partie de bord (38A, 52A, 62A) et la seconde partie de bord (38B, 52B, 62B) dans le corps de chenille (30) comprend l'étape consistant à enfermer la une saillie dans le corps de chenille (30) et l'étape consistant à former le corps de chenille (30) avec les deux régions latérales (70A, 70B, 70C, 70D) de la première ou seconde partie de bord (38A, 52A, 62A, 38B, 52B, 62B) respective.

8. Procédé selon l'une quelconque des revendications 5 à 7, comprenant en outre, avant l'étape consistant à former le corps de chenille (30) autour d'au moins une partie de chaque noyau (16, 29, 50, 60), l'étape consistant à appliquer un adhésif ou une couche d'accroche sur la pluralité de noyaux (16, 29, 50, 60).
